# DEMANDE DE BREVET EUROPEEN

(11) **EP 3 754 866 A1**
(43) Date de publication de la demande: **23.12.2020**
(21) Numéro de dépôt: 20180049.7
(22) Date de dépôt: 15.06.2020
(51) Int. Cl.: H04B 7/185, H04B 7/204

(54) **CHARGE UTILE DE TÉLÉCOMMUNICATIONS À FLEXIBILITE DE COUVERTURE ET DE CAPACITÉ**

(30) Priorité: 20.06.2019 FR 1906634
(71) Demandeur: THALES, 92400 Courbevoie (FR)
(72) Inventeur: CHARRAT, Bernard, 31037 Toulouse Cedex 1 (FR)
(74) Mandataire: Marks & Clerk France

(57) **Abrégé**

L'invention concerne une charge utile de télécommunications pour couverture satellite multi-faisceau, comportant au moins une antenne et une pluralité de sources (SRC) reliées à l'antenne pour délivrer un faisceau correspondant à un spot sur la surface de la Terre, le satellite comprenant une pluralité d'amplificateurs haute puissance (HPA) configurés pour alimenter les sources (SRC), caractérisé en ce que la charge utile comprend également une pluralité de dispositifs de routage en anneau (DRA), chaque dispositif de routage en anneau (DRA) comprenant Ne ports d'entrée (E), où Ne ≥ 2, chaque port d'entrée (E) étant relié à un des amplificateurs haute puissance (HPA), et comprenant également Ns ports de sortie (S), chaque port de sortie (S) étant connecté d'une part à une source (SRC), et pouvant être connecté d'autre part à au plus un port d'entrée (E), et passer alternativement d'un état de connexion à un état de déconnexion, chaque dispositif de routage en anneau (DRA) étant configuré pour que, à un instant t, Ne ports de sortie (S) parmi les Ns ports de sortie (S) puissent être alimentés en fonction de la couverture souhaitée.

L'invention permet d'obtenir une flexibilité de couverture et de distribution de capacité.

## Description

### Domaine technique :

L'invention se situe dans le domaine des télécommunications spatiales de type multifaisceaux (ou multispots). En particulier, l'invention se situe dans le domaine des satellites à haut débit ou à très haut débit, respectivement appelés HTS (« High Throughput Satellites) et VHTS (« Very High Throughput Satellites »), qui mettent en œuvre une technologie de réutilisation de fréquences sur des faisceaux très étroits (généralement entre 0,3° et 0,7°). La réutilisation de fréquences permet de démultiplier la capacité du satellite, par rapport aux satellites de génération précédente.

### Technique antérieure :

Les satellites de télécommunications de type multifaisceaux permettent de couvrir une partie d'une surface de la Terre où est disposée un certain nombre d'utilisateurs. La surface est segmentée en spots, dont la capacité varie en fonction de la demande, à savoir du nombre estimé d'utilisateurs. Une capacité relativement faible peut être allouée à des spots se trouvant dans les zones où la demande est faible, par exemple dans les zones désertiques. A l'inverse, dans les zones à forte densité de population, par exemple les zones côtières, une capacité plus élevée par spot est requise. Un système de télécommunications est ainsi dit flexible en capacité et en couverture lorsqu'il est en mesure d'adapter la capacité offerte et la couverture à la demande de capacité des utilisateurs et à leur répartition géographique. Il est à noter que la demande des utilisateurs varie avec le temps, dans une même journée. Par exemple, dans un même spot, la demande est généralement plus importante à 18 heures qu'à 3 heures du matin.

A chaque spot correspond un faisceau généré par une antenne (par une ou plusieurs sources, et un réflecteur). En amont des antennes, le signal est amplifié par un amplificateur haute puissance, généralement un tube à ondes progressives ou un amplificateur à état solide, afin d'amplifier les données utiles émises par une passerelle satellite (ou station d'ancrage) située au sol en voie aller, ou par un terminal utilisateur en voie retour.

Afin de limiter le nombre d'amplificateurs haute puissance à bord du satellite tout en ayant un nombre de spots élevé, un multiplexage temporel est mis en place. Le multiplexage temporel, également appelé saut de faisceau temporel ou « beam hopping » selon la terminologie anglo-saxonne, permet d'éclairer chaque faisceau alimenté par un même système amplificateur pendant une durée proportionnelle à la demande de trafic, ce qui permet d'obtenir un certain niveau de flexibilité de capacité et de couverture.

Par flexibilité en couverture, on entend la possibilité d'éclairer certaines zones (ou de ne pas les éclairer) de la surface totale couverte par le satellite. La flexibilité en couverture peut être requise lorsqu'il s'agit par exemple d'éclairer successivement plusieurs régions ayant des longitudes différentes, en fonction du décalage horaire. Un autre exemple de flexibilité de couverture consiste à éclairer successivement plusieurs régions qui suivent la trajectoire d'un avion.

Les systèmes de télécommunications doivent donc offrir aux opérateurs de télécommunications une répartition de capacité adaptative en fonction de la demande, à faible coût et fiable, permettant des reconfigurations très rapides.

Plusieurs solutions existent actuellement pour réaliser une couverture à saut de faisceau temporel.

La première solution consiste à utiliser des commutateurs ferrite SP2T (pour « Single Pole Double Throw », ou une entrée et deux sorties). Les données à transmettre aux utilisateurs sont amplifiées dans des amplificateurs haute puissance, puis elles sont réparties sur plusieurs faisceaux, en fonction d'un schéma spatio-temporel prédéterminé. Par « amplificateurs haute puissance », on entend des amplificateurs configurés pour fournir une puissance de sortie comprise entre 10 W et 200 W. Les commutateurs ferrite SP2T fonctionnent sur le principe du circulateur. Le sens de circulation autour du circulateur dépend du champ magnétique de polarisation qui est appliqué. La puissance de sortie commute ainsi entre deux ports de sorties en fonction du champ magnétique de polarisation, pour mettre en œuvre un schéma de commutation dit 1 vers 2. Bien qu'il soit possible en théorie de cascader une pluralité de commutateurs ferrite SP2T afin de mettre en œuvre un schéma de commutation 1 vers N, cette mise en cascade est généralement limitée à 1 vers 4, en mettant en cascade deux niveaux de commutateurs ferrite SP2T. En effet, au-delà de deux commutateurs ferrite SP2T, les pertes commencent à devenir conséquentes, compte tenu de la puissance des signaux à transmettre.

Cette solution offre un premier niveau de flexibilité, avec la possibilité de partager temporellement un amplificateur haute puissance parmi N faisceaux, généralement deux ou quatre. Elle permet par ailleurs d'utiliser pleinement la bande de fréquences des tubes. Les tubes sont donc en nombre réduit, utilisés à leur maximum de bande. Néanmoins avec un schéma de commutation 1 vers 2 ou 1 vers 4, l'échange de capacité ne peut se faire qu'au sein d'un petit groupe de spots (deux ou quatre spots), ce qui offre une flexibilité avec une adaptabilité réduite. Si par exemple deux spots associés au sein d'un même groupe dans un schéma de commutation 1 vers 2 demandent plus de capacité, la demande ne pourra pas être satisfaite.

Une autre solution consiste à utiliser un processeur numérique (qui peut être transparent ou régénératif), ou DP (Digital Processor). Le processeur numérique permet d'attribuer à chaque entrée d'amplificateur haute puissance la bande utile requise adaptable dynamiquement. Chaque amplificateur haute puissance alimente ensuite directement un spot (qui reçoit toute la bande de l'amplificateur) ou plusieurs qui reçoivent chacun une portion de la bande selon un partage en bande prédéfini et fixe dans le temps. De ce fait l'amplificateur doit être dimensionné (en puissance) pour le cas d'émission de la bande maximale et sera sous employé dans le cas contraire ce qui aboutit à un surdimensionnement des amplificateurs haute puissance mais avec pour bénéfice une flexibilité avec une adaptabilité très forte.

Aucune des solutions de l'art antérieur ne permet d'obtenir simultanément une flexibilité et une adaptabilité très forte, tout en minimisant le nombre d'amplificateurs haute puissance. L'invention vise à obtenir une solution présentant ces différentes caractéristiques.

### Résumé de l'invention :

L'invention se rapporte donc à une charge utile de télécommunications pour couverture satellite multi-faisceau, comportant au moins une antenne et une pluralité de sources reliées à l'antenne pour délivrer un faisceau correspondant à un spot sur la surface de la Terre, la charge utile comprenant une pluralité d'amplificateurs haute puissance configurés pour alimenter les sources, caractérisé en ce que la charge utile comprend également une pluralité de dispositifs de routage en anneau, chaque dispositif de routage en anneau comprenant Ne ports d'entrée, où Ne ≥ 2, chaque port d'entrée étant relié à un des amplificateurs haute puissance, et comprenant également Ns ports de sortie, chaque port de sortie étant connecté d'une part à une source, et pouvant être connecté d'autre part à au plus un port d'entrée , et passer alternativement d'un état de connexion à un état de déconnexion, chaque dispositif de routage en anneau étant configuré pour que, à un instant t, Ne ports de sortie parmi les Ns ports de sortie puissent être alimentés en fonction de la couverture souhaitée.

Avantageusement, la charge utile comprend un dispositif de commande configuré pour commander, dans chaque dispositif de routage en anneau, la connexion ou la déconnexion de chaque port de sortie vis-à-vis de chacun des ports d'entrée, le dispositif de commande appliquant une commande telle que pour chaque signal de données reçu par la charge utile et entrant au niveau d'un port d'entrée, il n'y ait qu'un seul trajet possible entre le port d'entrée et le port de sortie souhaité, et qu'il n'y ait pas d'interférences entre différents trajets dans le dispositif de routage en anneau.

Avantageusement, le dispositif de commande est configuré pour mettre en œuvre un multiplexage temporel tel que, sur une période donnée, pour chaque ensemble de Ne trames composée chacune d'un nombre d'intervalles de temps identiques, la somme des intervalles de temps reçus simultanément au niveau de chacun des Ne ports d'entrée du dispositif de routage en anneau soit égale à la somme des intervalles de temps associés aux ports de sortie connectés d'un même dispositif de routage en anneau, le nombre de ports de sortie connectés sur ladite période étant compris entre Ne et Ns

Avantageusement, la surface couverte par le satellite de télécommunications pouvant être segmentée en Ns mailles élémentaires, chaque maille élémentaire comportant autant de spots que la charge utile comprend de dispositifs de routage en anneau.

Avantageusement les ports d'entrée et de sortie sont reliés entre eux, dans le dispositif de routage en anneau, par au moins un commutateur à ferrite de type R, ou par au moins un commutateur ferrite SP2T.

Avantageusement, le dispositif de routage en anneau comprend un premier, un deuxième et un troisième ports d'entrée, et un premier, un deuxième, un troisième, un quatrième, un cinquième, un sixième, un septième, un huitième et un neuvième ports de sortie, et comprenant par ailleurs un premier commutateur à ferrite de type R couplé au premier port d'entrée et au premier port de sortie, un deuxième commutateur à ferrite de type R couplé au premier commutateur à ferrite, au deuxième port de sortie et au troisième port de sortie, un troisième commutateur à ferrite de type R couplé au deuxième commutateur à ferrite de type R, au deuxième port d'entrée et au quatrième port de sortie, un quatrième commutateur à ferrite couplé au troisième commutateur à ferrite de type R, au cinquième port de sortie et au sixième port de sortie, un cinquième commutateur à ferrite de type R couplé au quatrième commutateur à ferrite de type R, au troisième port d'entrée et au septième port de sortie, un sixième commutateur à ferrite de type R couplé au cinquième commutateur à ferrite de type R, au premier commutateur à ferrite de type R, au huitième port de sortie et au neuvième port de sortie.

Avantageusement, le dispositif de routage en anneau comprend un premier et un deuxième ports d'entrée, et un premier, un deuxième, un troisième et un quatrième ports de sortie, et comprenant par ailleurs un premier commutateur à ferrite de type R couplé au premier port d'entrée, au premier port de sortie et au troisième port de sortie, et un deuxième commutateur à ferrite de type R couplé au deuxième port d'entrée, au deuxième port de sortie et au quatrième port de sortie.

Avantageusement, la charge utile comprend une pluralité de dispositifs de filtrage, chaque dispositif de filtrage étant couplé à un des amplificateurs haute puissance, chaque dispositif de filtrage comprenant un filtre passe-haut et un filtre passe-bas, les ports d'entrée d'un dispositif de routage en anneau étant couplés exclusivement à des filtres passe-haut, ou exclusivement à des filtres passe-bas.

Avantageusement, la charge utile comprend seize dispositif de routage en anneau, et dans lequel Ne=3, Ns=9.

L'invention se rapporte également à un satellite comprenant une charge utile précitée.

### Brève description des figures :

L'invention sera mieux comprise et d'autres caractéristiques et avantages apparaîtront mieux à la lecture de la description qui suit, donnée à titre non limitatif, et grâce aux figures annexées parmi lesquelles :
La figure 1 représente un synoptique de la charge utile, voie aller, d'un satellite selon l'invention.
La figure 2 représente les quatre positions que peut prendre un commutateur ferrite de type R à un instant t.
La figure 3 représente un schéma d'un premier mode de réalisation d'un dispositif de routage en anneau selon l'invention.
Les figures 4A et 4B représentent un deuxième mode de réalisation d'un dispositif de routage en anneau selon l'invention, respectivement selon une représentation avec des commutateurs ferrite de type R et selon une représentation avec des commutateurs ferrite SP2T.
La figure 5 représente un schéma de répartition des spots sur la couverture, selon un schéma à quatre couleurs.
La figure 6 représente une table de connexion entre les spots et les sorties des dispositifs de routage selon l'invention.
Les figures 7A, 7B, 7C, 8A, 8B, 8C, 9A, 9B, 10, 11, 12 et 13 représentent différents exemples de de couverture pouvant être obtenues par le satellite selon l'invention.

Par la suite, lorsque des mêmes références sont utilisées dans des figures, elles désignent les mêmes éléments.

### Description détaillée :

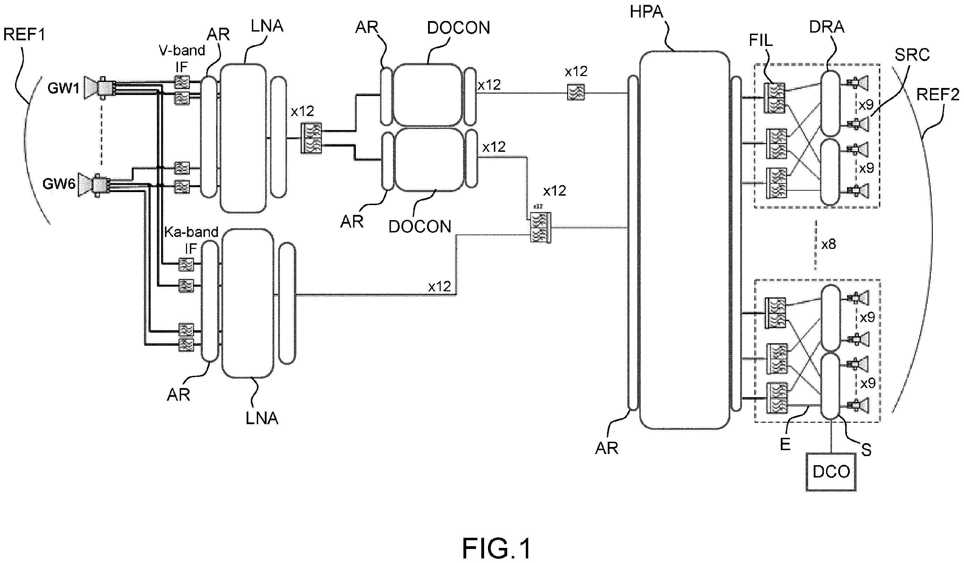

La figure 1 représente un synoptique de la charge utile, voie aller, d'un satellite selon l'invention. En particulier, la charge utile illustrée en figure 1 représente celle d'un satellite de type HTS ou VHTS. Les signaux émis par les différentes stations d'ancrage sur la liaison montante de la voie aller sont reçus au niveau des différentes sources de réception (GW1, ..., GW6), chaque source de réception étant dédié à une station d'ancrage. Un réflecteur REF1 permet de faire converger les signaux émis par les différentes stations d'ancrage.

La bande de réception de la liaison montante comprend deux sous-bandes, qui peuvent être disjointes, par exemple la bande 30/20 GHz et la bande V. Chaque signal est amplifié par des amplificateurs faible bruit LNA. Les signaux modulés sur la fréquence de la liaison montante sont ramenés à la fréquence de la liaison descendante (par exemple la bande Ka) par des convertisseurs abaisseurs de fréquence DOCON. Un filtrage passe-bande est effectué à la fréquence de la liaison descendante pour chacun des canaux fréquentiels reçus. Chaque filtre a une largeur de bande correspondant à la bande totale amplifiée par chaque amplificateur haute puissance. Une section d'amplification permet d'amplifier les signaux avant leur transmission sur la voie descendante, par exemple en bande Ka. La section d'amplification comprend une pluralité d'amplificateurs haute puissance HPA. Les amplificateurs haute puissance HPA peuvent être des tubes à ondes progressives, ou tout autre dispositif capable d'amplifier les signaux destinés à être transmis sur la liaison descendante, à une puissance suffisamment élevée, et dans la bande de fréquence de la liaison descendante.

Une section de filtrage FIL permet, après les amplificateurs haute puissance, de démultiplexer les canaux. Chaque canal est ensuite réparti temporellement entre plusieurs spots.La section d'amplification est connectée à un système antennaire passif comprenant un réflecteur REF2 et un ensemble de sources SRC destinées à éclairer une zone de la Terre, appelée couramment « spot ». Un ou plusieurs terminaux utilisateurs peuvent se trouver dans chaque spot.

Afin d'éclairer un nombre de spots supérieur au nombre de canaux fréquentiels, un système de saut de faisceau temporel (beam hopping) est mis en place. La charge utile selon l'invention met en œuvre un saut de faisceau en utilisant une pluralité de dispositifs de routage en anneau DRA. La configuration « en anneau » permet de connecter une pluralité de sources SRC à une pluralité d'entrées issues de la section d'amplification. Chaque dispositif de routage en anneau DRA comprend Ne ports d'entrée E, où Ne≥2. Le dispositif de routage en anneau DRA selon l'invention se distingue ainsi des dispositifs de saut de faisceau de l'art antérieur qui ne disposent que d'un seul port d'entrée connecté à la section d'amplification (et de deux ou quatre ports de sortie). Par ailleurs, le dispositif de routage en anneau DRA selon l'invention dispose de Ns ports de sortie S (Ns≥Ne). Chaque port de sortie est relié à une source SRC pour éclairer un spot. A chaque instant t, Ne ports de sortie sont alimentés.

Ainsi, en fonction de la couverture souhaitée, un certain nombre de ports de sorties et donc de sources doivent être sélectivement connectés à un port d'entrée, ou ne pas être alimentés.

Le système antennaire de la charge utile selon l'invention ne requiert pas d'antenne active, ce qui limite son coût de fabrication.

A titre d'exemple, avec six stations d'ancrage, il est possible d'alimenter vingt-quatre amplificateurs haute puissance HPA (chaque station d'ancrage permet d'alimenter quatre tubes sur 2,9 GHz). Ces amplificateurs haute puissance HPA permettent d'alimenter seize dispositifs de routage en anneau DRA (chaque dispositif de routage en anneau DRA est alimenté par trois demi bandes). Chaque dispositif de routage en anneau DRA alimentant neuf spots, il donc possible d'alimenter cent quarante-quatre spots au sol..

Le fait de disposer d'au moins deux ports d'entrée contrairement aux schémas de commutation 1 vers 2 ou 1 vers 4, permet également de continuer à alimenter des spots en mode « dégradé », sans interrompre le service. Par exemple, si un amplificateur haute puissance HPA (sur les trois reliés au dispositif de routage en anneau DRA) tombe en panne, il est possible de continuer à alimenter les spots initialement couverts avec deux amplificateurs haute puissance, et un tiers de capacité en moins. Il en résulte qu'il est même possible de supprimer les amplificateurs haute puissance redondants habituellement embarqués dans une charge utile, à savoir ceux qui ne servent qu'en cas de panne d'un des dispositifs d'amplification, dans la mesure où, en cas de panne, aucun spot n'est perdu. Cette même propriété permet de faire du déploiement progressif des stations d'ancrage, ce qui revient à démarrer le système avec un sous ensemble de station d'ancrage puis à en augmenter le nombre au fur et à mesure de la hausse de la demande (optimisation des coûts du système).

Un dispositif de commande DCO permet de contrôler et de modifier les états de connexion et/ou de déconnexion de chacun des ports de sortie des dispositifs de routage en anneau DRA, en fonction de la distribution de capacité souhaitée. Le dispositif de commande DCO peut se présenter sous la forme d'une carte électronique ou d'un sous-ensemble d'une carte électronique, apte à commander les commutations d'état de connexion des ports de sortie de tous les dispositifs de routage en anneau DRA. Le dispositif de commande DCO est relié à l'ensemble des dispositifs de routage en anneau DRA, bien que sur la figure 1, le dispositif de commande DCO soit relié à un seul dispositif de routage en anneau DRA, pour des raisons de lisibilité de la figure.

Avantageusement, chaque dispositif de filtrage FIL est couplé à un des amplificateurs haute puissance HPA. Chaque dispositif de filtrage FIL comprend un filtre passe-haut et un filtre passe-bas, les ports d'entrée d'un dispositif de routage en anneau DRA étant couplés exclusivement à des filtres passe-haut, ou exclusivement à des filtres passe-bas. Il est ainsi possible de mettre en place un schéma de couverture à quatre couleurs, chaque couleur étant définie par un couple polarisation/fréquence. Ainsi, quatre spots adjacents peuvent être isolés les uns par rapport aux autres.

Il est bien entendu possible de faire appel à un filtrage plus fin, en scindant par exemple chaque canal fréquentiel après amplification en quatre sous-bandes de fréquence, ou en un nombre plus élevé.

Le filtrage est optionnel : il est possible d'alimenter les sources avec une seule et même bande de fréquence, sans partage fréquentiel.

Avantageusement, les ports d'entrée E et de sortie S du dispositif de routage sont reliés entre eux par au moins un commutateur à ferrite de type R (ou R-switch ferrite), ou par au moins un commutateur à ferrite SP2T. Ces commutateurs permettent de faire passer des puissances élevées. Il est connu d'utiliser à bord des charges utiles des commutateurs de type R mécaniques. En effet, dans les anneaux de redondance AR, en cas de panne d'un sous-ensemble de la charge utile, par exemple le bloc d'amplificateurs faible bruit LNA, ou encore le bloc d'amplification haute puissance HPA, le commutateur de type R mécanique est utilisé. Etant donné que les cas de défaillance d'un de ces sous-ensembles sont statistiquement peu nombreux, une commutation peut être réalisée mécaniquement. Le dispositif de routage en anneau selon l'invention est quant à lui amené à commuter à haute fréquence, notamment afin de réaliser un multiplexage temporel. Ainsi, le commutateur à ferrite de type R, qui n'a pas de partie mobile permet ainsi de faire varier rapidement, et de façon répétée, le trajet des signaux traversant le commutateur à ferrite de type R, et sans interrompre la transmission du paquet de données, ou tout au plus avec une interruption extrêmement courte, de l'ordre de quelques microsecondes.

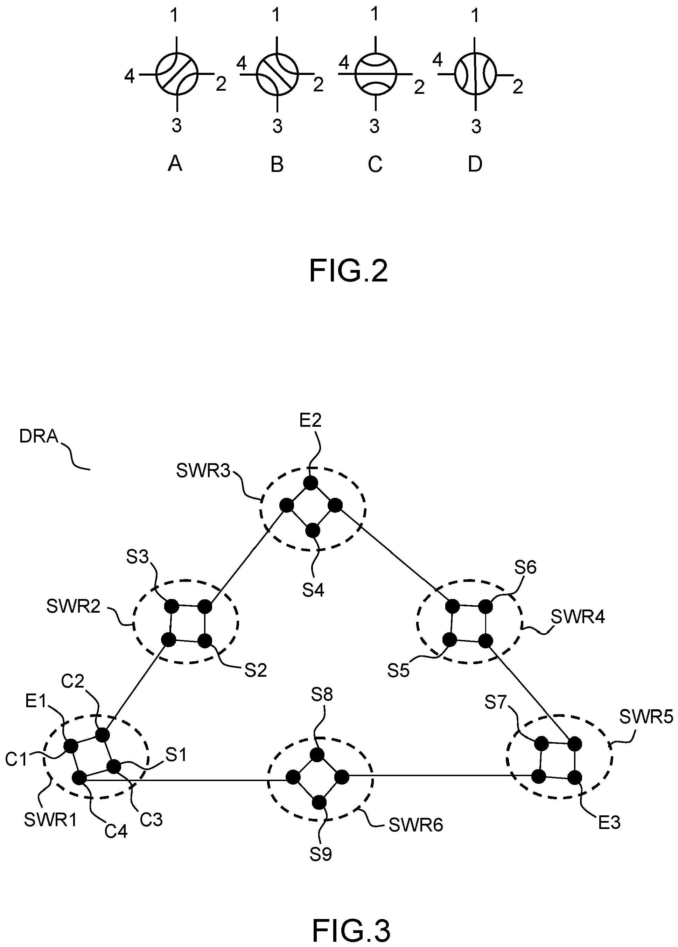

La figure 2 illustre les différentes positions que peut prendre un commutateur à ferrite de type R. Le commutateur à ferrite de type R est un composant à quatre pôles (numérotés 1, 2, 3 et 4 dans le sens horaire), composé de sections guidées qui ne peuvent s'entrecroiser. Selon une première position A, les pôles 1 et 4 sont reliés par un trajet guidé, et les pôles 2 et 3 par un autre trajet guidé (configuration dite en balle de tennis). Selon une deuxième position B, les pôles 1 et 2 sont reliés par un trajet guidé, et les pôles 3 et 4 par un autre trajet guidé (configuration dite incurvée, ou en balle de tennis). Selon une troisième position C, les pôles 2 et 4 sont reliés par un trajet guidé, et les pôles 1 et 3 sont isolés l'un par rapport à l'autre (configuration dite traversante). Selon une quatrième position D, les pôles 1 et 3 sont reliés par un trajet guidé, et les pôles 2 et 4 sont isolés l'un par rapport à l'autre (configuration dite traversante). En fonction de la magnétisation des éléments à ferrite présents dans le commutateur à ferrite de type R, celui-ci prend l'une ou l'autre des positions parmi les quatre présentées.

D'un point de vue structurel, chaque commutateur à ferrite de type R est composé de quatre circulateurs à ferrite (ou commutateurs ferrite SP2T), connectés l'un à l'autre.

La figure 3 illustre un exemple de mise en œuvre d'un dispositif de routage selon l'invention. Il comprend un premier E1, un deuxième E2 et un troisième E3 ports d'entrée. Chacun des ports d'entrée est relié directement ou indirectement (via un dispositif de filtrage) à un amplificateur haute puissance tel un tube HPA. Le dispositif de routage comprend également un premier S1, un deuxième S2, un troisième S3, un quatrième S4, un cinquième S5, un sixième S6, un septième S7, un huitième S8 et un neuvième S9 ports de sortie. Chacun des ports de sorties est relié à une source SRC, sachant que le port de sortie peut être ou non alimenté par un port d'entrée, selon la configuration des commutateurs à ferrite de type R.

Par exemple, si le commutateur à ferrite de type R SWR6 est en position traversante en reliant les commutateurs à ferrite de type R SWR1 et SWR5, les ports de sorties S8 et S9 ne reçoivent aucun signal ; ainsi les sources reliées à ces ports de sorties sont désactivées.

La détermination de la position de chacun des commutateurs à ferrite de type R est faite de telle sorte que chaque signal entrant au niveau d'un port d'entrée puisse sortir au niveau d'un port de sortie. Un commutateur à ferrite de type R donné ne peut donc pas se voir assigné une position traversante reliant deux ports de sorties, comme par exemple les ports de sortie S8 et S9 dans le commutateur à ferrite de type R SWR6.

Le dispositif de routage illustré en figure 3 présente une configuration schématiquement triangulaire à trois entrées et neuf sorties. Il comprend un premier commutateur à ferrite de type R SWR1 couplé au premier port d'entrée E1 et au premier port de sortie S1, un deuxième commutateur à ferrite de type R SWR2 couplé au premier commutateur à ferrite SWR1, au deuxième port de sortie S2 et au troisième port de sortie S3, un troisième commutateur à ferrite de type R SWR3 couplé au deuxième commutateur à ferrite de type R SWR2, au deuxième port d'entrée E2 et au quatrième port de sortie S4, un quatrième commutateur à ferrite SWR4 couplé au troisième commutateur à ferrite de type R SWR3, au cinquième port de sortie S5 et au sixième port de sortie S6, un cinquième commutateur à ferrite de type R SWR5 couplé au quatrième commutateur à ferrite de type R SWR4, au troisième port d'entrée E3 et au septième port de sortie S7, un sixième commutateur à ferrite de type R SWR6 couplé au cinquième commutateur à ferrite de type R SWR5, au premier commutateur à ferrite de type R SWR1, au huitième port de sortie S8 et au neuvième port de sortie S9.

Par exemple, le signal arrive au niveau du premier port d'entrée E1, le dispositif de commande DCO peut commander le premier commutateur à ferrite de type R SWR1 pour être en position traversante, le signal peut ainsi être transmis à la source connectée au premier port de sortie S1. En variante, le dispositif de commande peut commander le premier commutateur à ferrite de type R SWR1 ainsi que le deuxième commutateur à ferrite de type R SWR2 pour être en position incurvée (ou balle de tennis); ainsi, le signal peut ainsi être transmis à la source connectée au deuxième port de sortie S2, ou au troisième port de sortie S3.

La combinatoire des positions possibles est limitée par le fait que chaque signal entrant au niveau d'un port d'entrée doit pouvoir être acheminé vers un port de sortie, sans croiser un autre signal. La configuration requise est imposée par la distribution de capacité souhaitée, comme illustré par la suite.

Par ailleurs, la définition du trajet emprunté par chaque signal peut être régie par le nombre de commutateurs à ferrite de type R à traverser; les pertes en puissance augmentent avec le nombre de commutateurs à ferrite de type R traversés.

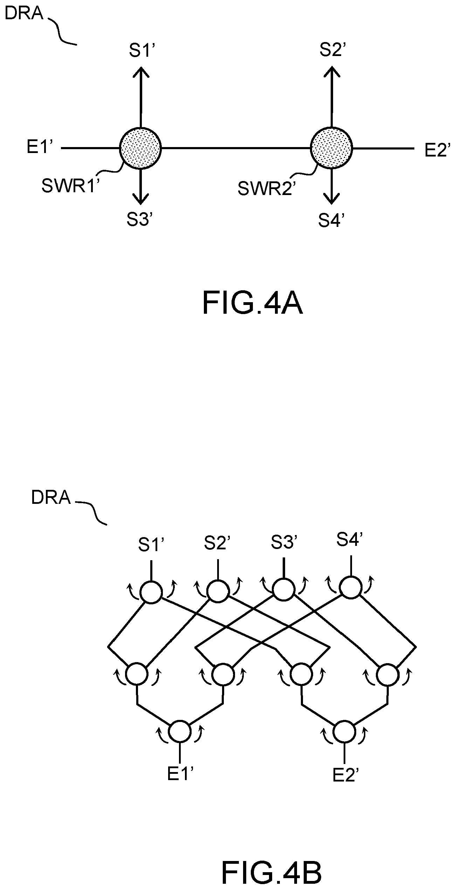

Les figures 4A et 4B illustrent un deuxième mode de réalisation du dispositif de routage selon l'invention.

La figure 4A représente le dispositif de routage en anneau en vue synthétique, avec les commutateurs à ferrite de type R. Il comprend un premier E1' et un deuxième E2' ports d'entrée, et un premier S1' et un deuxième S2', un troisième S3' et un quatrième S4' ports de sortie. Chaque port d'entrée est relié, indirectement ou directement, à un des amplificateurs haute puissance, par exemple des tubes. Chaque port de sortie est connecté à sa source correspondante, qui est alimentée en fonction de la commande fournie par le dispositif de commande DCO. Le dispositif de routage en anneau DRA comprend un premier commutateur à ferrite de type R SWR1' couplé au premier port d'entrée E1', au premier port de sortie S1' et au troisième port de sortie S3', et un deuxième commutateur à ferrite de type R SWR2' couplé au deuxième port d'entrée E2', au deuxième port de sortie S2' et au quatrième port de sortie S4'.

La figure 4B représente le même dispositif de routage en anneau, avec les commutateurs ferrite SP2T. La charge utile selon l'invention permet en effet de faire commuter des commutateurs à ferrite SP2T dans des dispositifs de routage en anneau, en utilisant le même principe que pour les commutateurs à ferrite de type R. Le dispositif de routage en anneau DRA comprend Ne ports d'entrées (E1', E2') et Ns ports de sortie (S1'-S4'), où 2≤Ne ≤Ns.

Le deuxième mode de réalisation permet ainsi au dispositif de routage de sélectionner une sortie parmi quatre pour chacune des deux entrées.

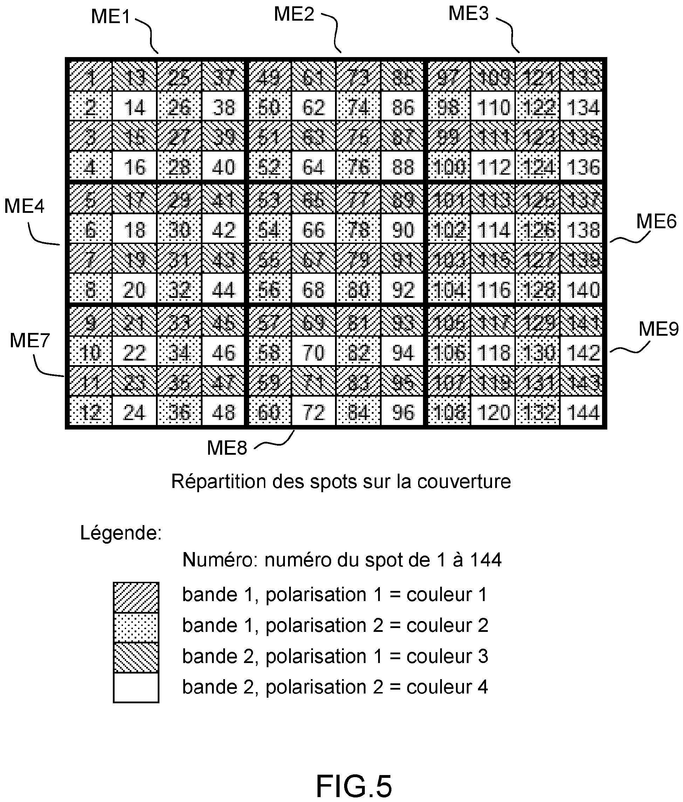

La figure 5 représente un exemple de schéma de répartition de 144 spots sur la couverture avec la charge utile selon l'invention. Sur la figure 5, les spots sont rectangulaires ; d'autres formes de spots peuvent être envisagées, sans que cela ne limite l'invention. Le schéma de répartition fait appel à un schéma à quatre couleurs. Les quatre couleurs peuvent être définies par un couple {bande, polarisation}. Ainsi, comme illustré par la figure 5, la couleur 1 est définie par le couple {bande 1, polarisation 1}, la couleur 2 est définie par le couple [bande 1, polarisation 2], la couleur 3 est définie par le couple [bande 2, polarisation 1], la couleur 4 est définie par le couple {bande 2, polarisation 2}. Les bandes 1 et 2 peuvent être respectivement la sous-bande haute et la sous-bande basse après passage par les dispositifs de filtrage FIL. Les polarisations 1 et 2 peuvent être respectivement la polarisation circulaire (ou elliptique) gauche et la polarisation circulaire (ou elliptique) droite, ou bien deux polarisations linéaires orthogonales.

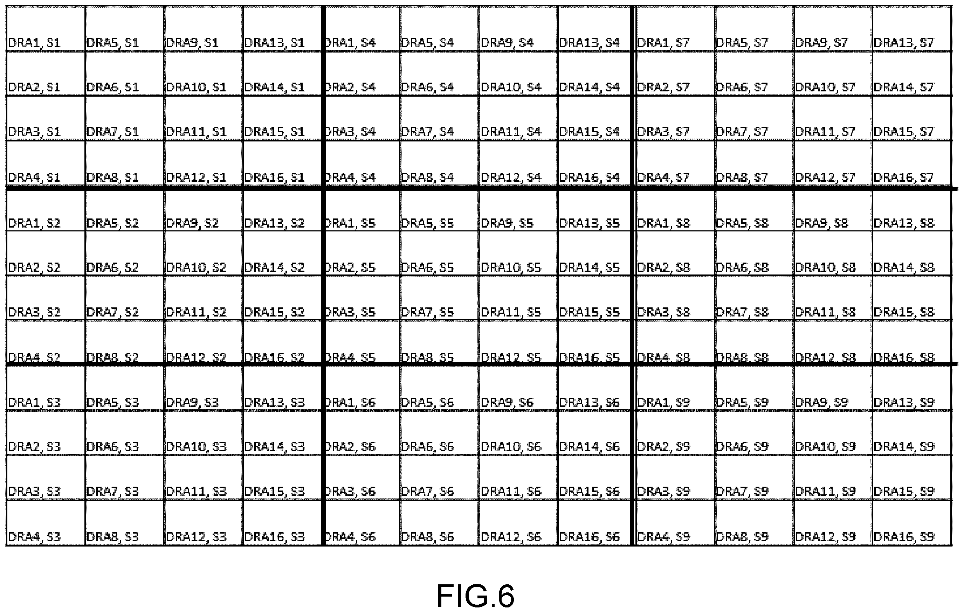

La figure 6 illustre un mode de réalisation de répartition des sorties d'un dispositif de routage selon l'invention. La surface couverte par le satellite de télécommunications peut être segmentée en Ns mailles élémentaires (ME1...ME9), par exemple neuf mailles élémentaires. Chacune des mailles élémentaires contient avantageusement un nombre identique de spots, qui correspond au nombre de dispositifs de routage en anneau DRA. Avantageusement, le nombre de mailles élémentaires est égal au nombre de ports de sorties de chacun des dispositifs de routage en anneau DRA. Ainsi, dans chaque maille élémentaire, chaque spot correspond à la sortie d'un dispositif de routage en anneau DRA différent. Dans chaque spot est indiqué le dispositif de routage en anneau (DRA1, ..., DRA16) et le port de sortie alimenté (S1, ..., S9). Par exemple, dans la maille élémentaire en haut à gauche ME1, les quatre spots de la première colonne en partant de la gauche correspondent respectivement à la première sortie de quatre dispositifs de routage en anneau numérotés 1 à 4. Les quatre spots de la deuxième colonne en partant de la gauche correspondent respectivement à la première sortie de quatre dispositifs de routage en anneau numérotés 5 à 8. Les quatre spots de la troisième colonne en partant de la gauche correspondent respectivement à la première sortie de quatre dispositifs de routage en anneau numérotés 9 à 12. Les quatre spots de la quatrième colonne en partant de la gauche correspondent respectivement à la première sortie de quatre dispositifs de routage en anneau numérotés 13 à 16. Ce motif de correspondance entre les ports de sortie des dispositifs de routage en anneau et les sources est reproduit dans chaque maille élémentaire. Ainsi, dans chaque maille élémentaire, les sources sont reliées à des dispositifs de routage en anneau différents. Comme indiqué précédemment, les dispositifs de routage en anneau DRA permettent alors de relier un dispositif de filtrage FIL à une source SRC qui émet alors le signal de communication correspondant. Sur un même dispositif de routage en anneau, chaque sortie reliée à une source appartient à une maille élémentaire différente.

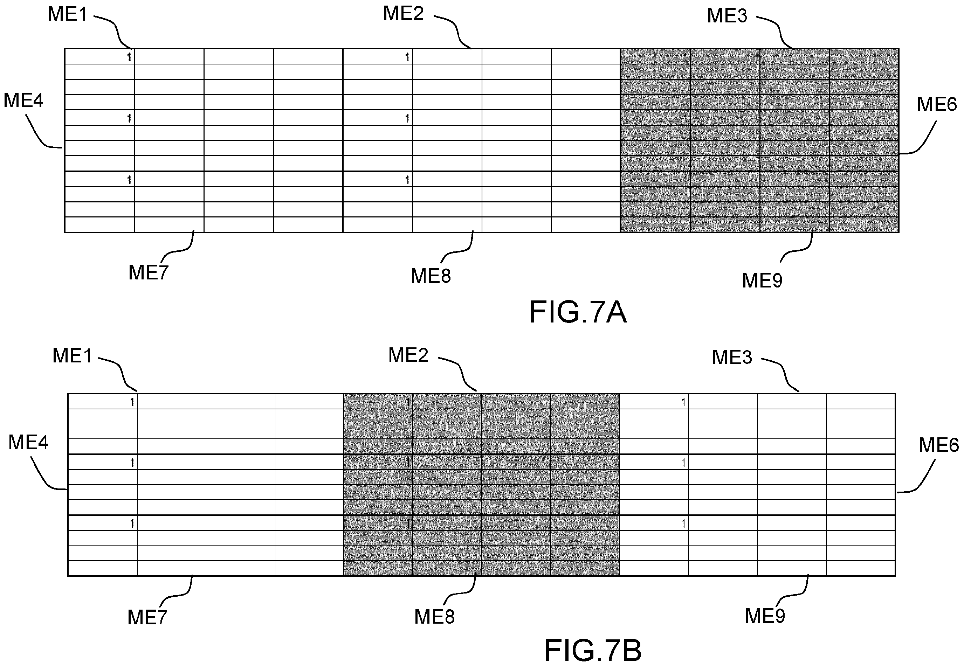

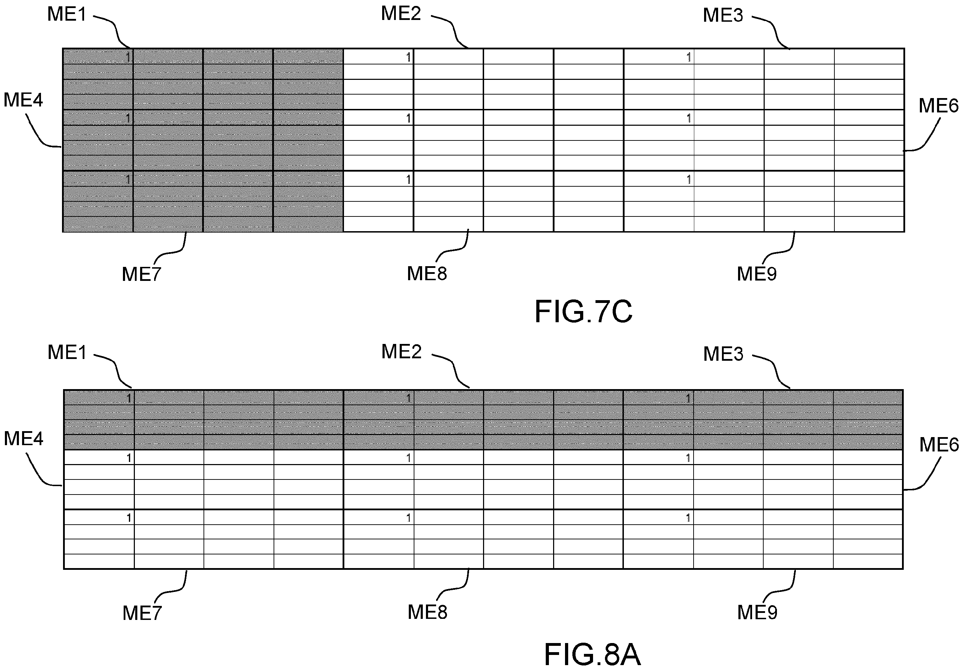

Les figures 7A, 7B et 7C illustrent un mode de réalisation dans lequel le nombre de ports de sortie alimentés est égal au nombre de ports d'entrée (Ns=Ne), à chaque instant t. Dans ce cas, les connexions sont permanentes. De plus tous les anneaux sont configurés de manière identique. Sur les figures 7A à 7C, les « 1 » représentent les ports de sortie d'un même dispositif de routage en anneau DRA. Une même notation pourrait être appliquée à tous les ports de sortie d'un même dispositif de routage en anneau DRA. Selon cette configuration, un tiers de ports de sortie d'un même dispositif de routage en anneau, soit trois sur neuf, sont effectivement alimentés en permanence et les autres ne le sont jamais. Ainsi, sur la figure 7A, les trois mailles élémentaires sont grisées à droite, en alimentant trois des neufs ports de sortie, dans tous les dispositifs de routage en anneau DRA. En référence à la figure 3, les ports de sortie S7, S8 et S9 de tous les dispositifs de routage en anneau DRA sont alimentés. Les autres ports de sortie sont tous en état de déconnexion. Cette couverture peut être obtenue en réglant le troisième commutateur à ferrite de type R SWR3 en position incurvée, le quatrième commutateur à ferrite de type R SWR4 en position traversante SWR3-SWR5, et le cinquième commutateur à ferrite de type R SWR5 en position incurvée. Par ailleurs, le sixième commutateur à ferrite de type R SWR6 est en position incurvée, tout comme le premier commutateur à ferrite de type R SWR1.

Sur la figure 7B, les trois mailles élémentaires sont grisées au centre, en alimentant trois des neufs ports de sortie, dans tous les dispositifs de routage en anneau DRA. En référence à la figure 3, les ports de sortie S4, S5 et S6 de tous les dispositifs de routage en anneau DRA sont alimentés. Les autres ports de sortie sont tous en état de déconnexion. La manière de régler la position des commutateurs à ferrite de type R est effectuée de façon analogue à la figure 7A, pour faire en sorte qu'il n'y ait pas d'interférence entre les trajets des signaux entrants au niveau des trois ports d'entrée, et les ports de sortie S4, S5 et S6.

Sur la figure 7C, les trois mailles élémentaires sont grisées à gauche, en alimentant trois des neufs ports de sortie, dans tous les dispositifs de routage en anneau DRA. En référence à la figure 3, les ports de sortie S1, S2 et S3 de tous les dispositifs de routage en anneau DRA sont alimentés. Les autres ports de sortie sont tous en état de déconnexion. La manière de régler la position des commutateurs à ferrite de type R est effectuée de façon analogue à la figure 7A, pour faire en sorte qu'il n'y ait pas d'interférence entre les trajets des signaux entrants au niveau des trois ports d'entrée, et les ports de sortie S1, S2 et S3.

Il ressort de cette configuration qu'une flexibilité en couverture peut être facilement obtenue par commutation des dispositifs de routage en anneau DRA. En effet, la couverture du satellite, à savoir la zone grisée, peut suivre la demande en fonction de la longitude de la zone couverte. Par exemple, si la zone de couverture totale, à savoir l'ensemble des mailles élémentaires, correspond schématiquement à un pays étendu en longitude, tel que les Etats-Unis, la figure 7A correspond à une couverture de la partie orientale des Etats-Unis à un instant T1, la figure 7B à la partie centrale du pays à un instant T2 (par exemple T1+3 h), et la figure 7C à la partie occidentale du pays à un instant T3 (par exemple T2+3 h).

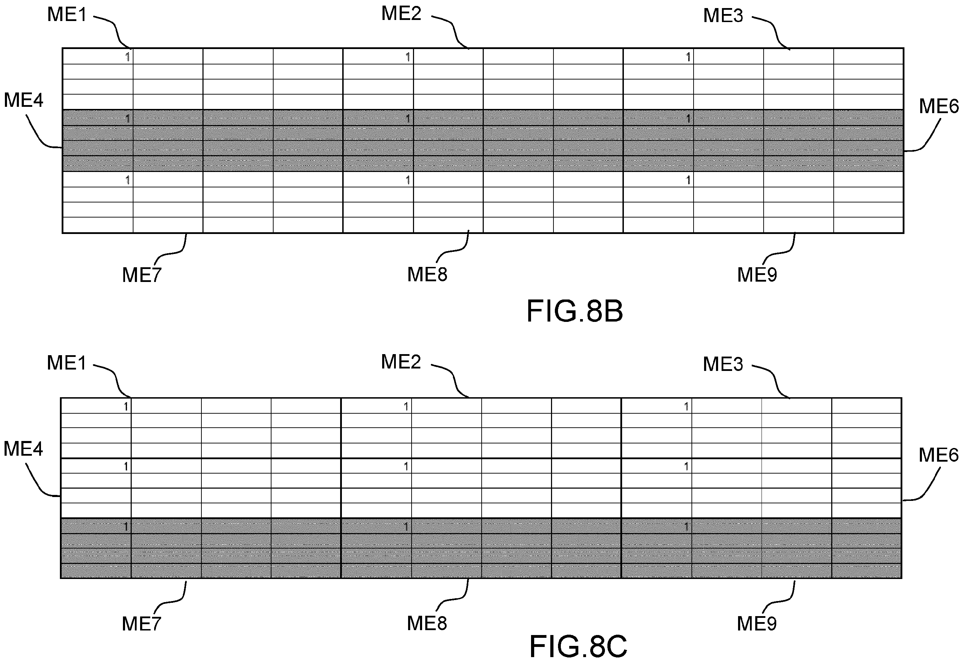

Les figures 8A, 8B et 8C illustrent une autre configuration illustrant la flexibilité en couverture de la charge utile selon l'invention. Dans cette configuration, le nombre de ports de sortie alimenté est égal au nombre de ports d'entrée (Ns=Ne). En référence avec la figure 3, sur la figure 8A, tous les ports de sortie S1, S4 et S7 de tous les dispositifs de routage en anneau sont alimentés. Les autres ports de sortie sont en état de déconnexion. Il y a donc une couverture de toute la bande supérieure de la surface totale. En référence avec le dispositif de routage en anneau DRA illustré par la figure 3, cette couverture peut être obtenue en réglant le premier commutateur à ferrite de type R SWR1 en position traversante E1-S1, le troisième commutateur à ferrite de type R SWR2 en position traversante E2-S4, et le cinquième commutateur à ferrite de type R SWR5 en position traversante E3-S7.

Sur la figure 8B, tous les ports de sortie S2, S5 et S8 de tous les dispositifs de routage en anneau sont alimentés. Les autres ports de sortie sont en état de déconnexion. Il y a donc une couverture de toute la bande centrale de la surface totale. En référence avec le dispositif de routage en anneau DRA illustré par la figure 3, cette couverture peut être obtenue en réglant les six commutateurs à ferrite de type R en position incurvée (balle de tennis).

Sur la figure 8C, tous les ports de sortie S3, S6 et S9 de tous les dispositifs de routage en anneau sont alimentés. Les autres ports de sortie sont en état de déconnexion. Il y a donc une couverture de toute la bande inférieure de la surface totale. En référence avec le dispositif de routage en anneau DRA illustré par la figure 3, cette couverture peut être obtenue en réglant les six commutateurs à ferrite de type R en position incurvée (balle de tennis).

Cette configuration offre une flexibilité en couverture, en particulier s'il y a besoin de couvrir différentes zones ayant des latitudes différentes, à des périodes successives de la journée. Cette configuration permet par exemple de suivre un ou plusieurs avions, effectuant une liaison Nord-Sud, afin d'assurer une liaison de télécommunications à bord.

Il est bien entendu possible, pour chaque dispositif de routage en anneau, de connecter un nombre de ports de sortie supérieur au nombre d'entrées.

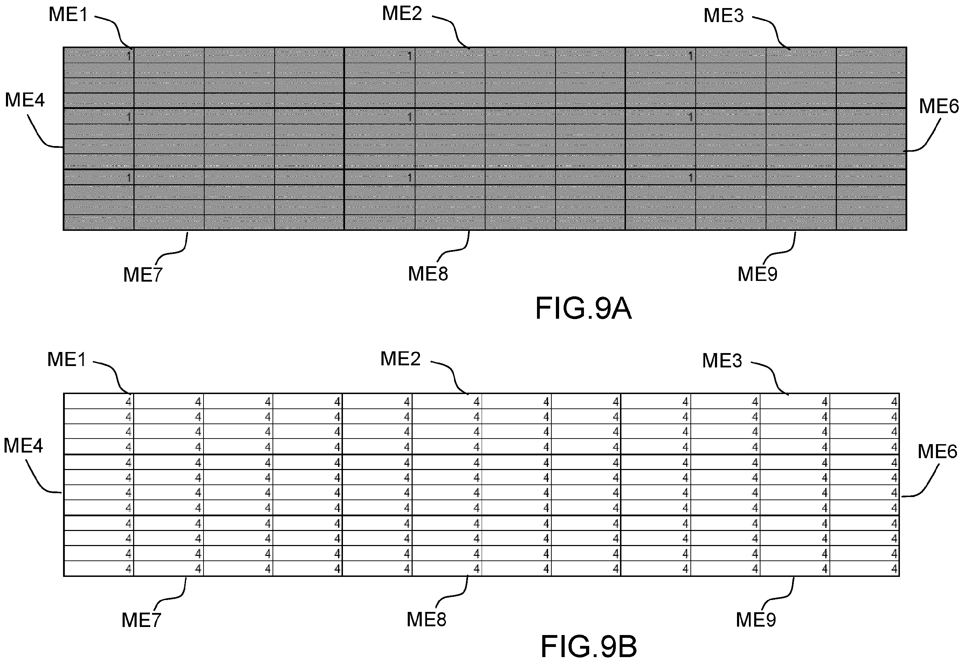

Dans la figure 9A, toutes les mailles élémentaires sont couvertes. Dans chaque dispositif de routage en anneau, étant donné que le nombre de ports de sorties connectés à une source est supérieur au nombre de ports d'entrée, il est nécessaire de mettre en œuvre un multiplexage temporel, illustré par la figure 9B. Par exemple, sur une période, pour chaque trame de données comprenant 12 intervalles de temps (ou « time slots »), trois mailles élémentaires reçoivent les intervalles de temps n°1-4, trois autres mailles élémentaires reçoivent les intervalles de temps n°5-8, et trois autres mailles élémentaires reçoivent les intervalles de temps n°9-12 (distribution dite « homogène »). Le même schéma est répété pour les périodes suivantes. Ainsi, chaque spot reçoit quatre intervalles de temps. Le regroupement des mailles élémentaires peut être réalisé par exemple comme illustré dans les figures 7A-7C, ou 8A-8C. Le nombre de ports de sortie connectés sur une période est compris entre Ne et Ns.

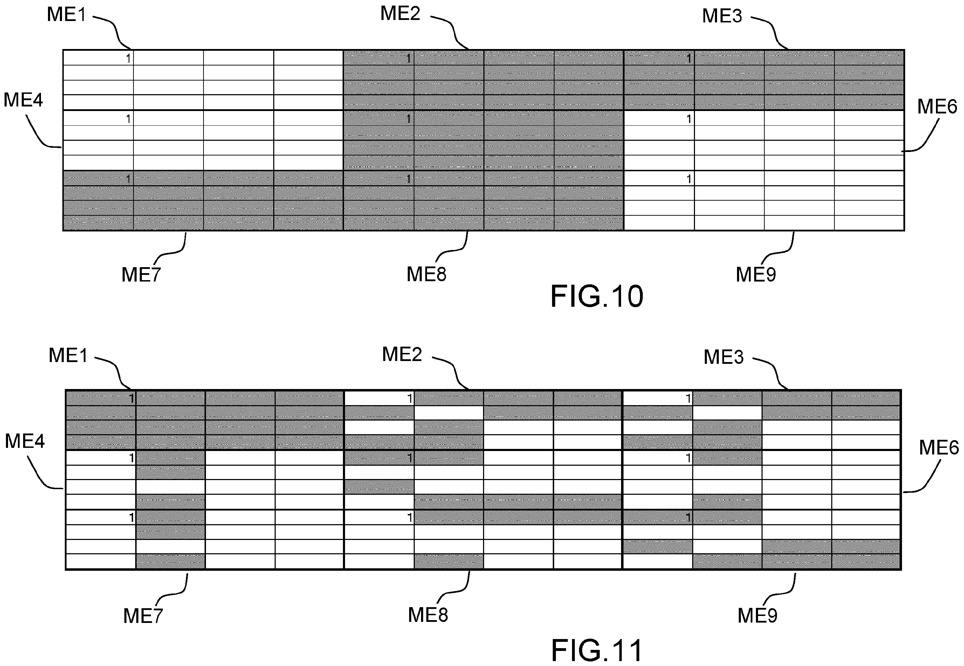

La figure 10 illustre un autre exemple de configuration, dans lequel, pour chaque dispositif de routage en anneau, cinq ports de sortie sur neuf sont en état de connexion vis-à-vis de leur source, les autres ports de sortie sont déconnectés. En référence à la figure 3, les ports de sortie S3, S4, S5, S6 et S7 sont alimentés. Un multiplexage temporel doit donc être mis en œuvre sur chaque période, car le nombre de ports de sorties alimentés est supérieur au nombre de ports d'entrée.

Les exemples de configuration décrits jusqu'à présent sont des configurations dites « à l'identique » : tous les dispositifs de routage en anneau sont configurés de la même manière, à savoir que l'état alimenté ou non de chaque sortie est identique d'un dispositif de routage à l'autre.

Il est tout à fait concevable, avec la charge utile conforme à l'invention, de réaliser une couverture plus fine dans chaque maille élémentaire, comme illustré par exemple par la figure 11. Sur cette figure, il apparaît que, d'un dispositif de routage à l'autre, ce ne sont pas les mêmes ports de sortie qui sont alimentés. Cette configuration illustre la capacité de la charge utile à moduler l'éclairage des spots en deux dimensions, à savoir éclairer certaines zones et pas d'autres selon la latitude et la longitude de la zone, en fonction des contraintes de couverture exigées par les opérateurs. Sur la figure 11, un multiplexage temporel est nécessaire sur chaque période, car le nombre de ports de sorties alimentés est supérieur au nombre de ports d'entrée.

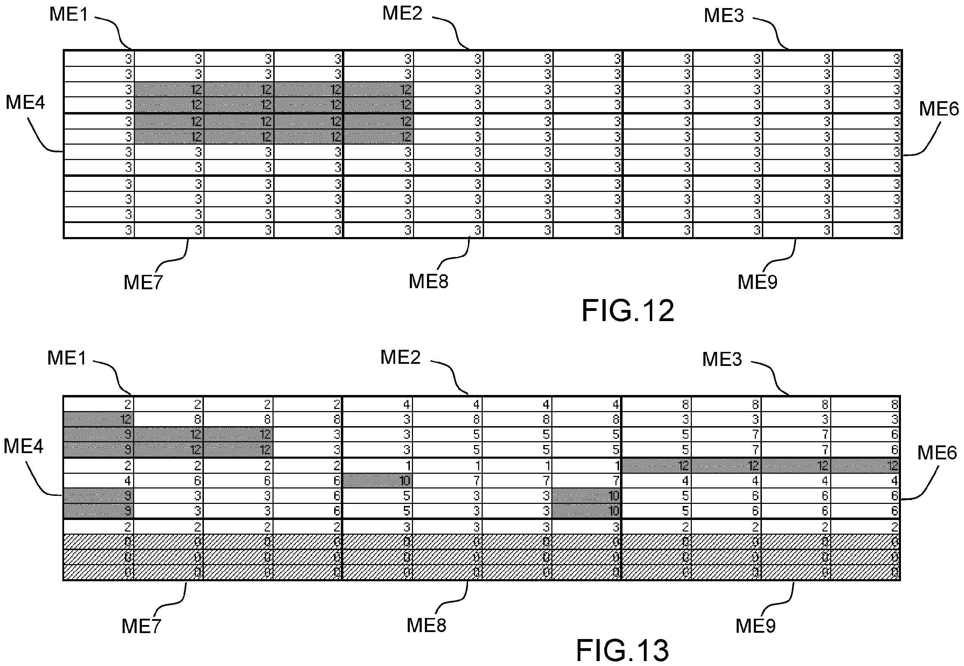

La figure 12 illustre un autre exemple de multiplexage temporel. Le nombre situé à l'intérieur de chaque spot représente le nombre de d'intervalles de temps alloués à un spot. Etant donné que les différentes trames reçues au niveau de chaque port d'entrée ont la même longueur, le dispositif de commande fait en sorte que la somme des intervalles de temps reçus simultanément au niveau de chacun des Ne ports d'entrée E de chaque dispositif de routage en anneau DRA soit égale à la somme des intervalles de temps associés aux ports de sortie S alimentés d'un même dispositif de routage en anneau DRA. Par exemple, en référence à la figure 12, considérant le dispositif de routage en anneau DRA dont les ports de sortie sont connectés aux sources qui éclairent le spot en bas à droite de chaque maille élémentaire : à supposer que chaque période comprenne douze intervalles de temps, le dispositif de routage en anneau reçoit durant chaque période trente-six intervalles de temps (3x12). Le spot de la maille élémentaire en haut à gauche est associée à douze intervalles de temps, tandis que les spots des autres mailles élémentaires sont associé à trois intervalles de temps chacun, ce qui fait un total de 12+3x8=36 intervalles de temps en sortie. Cette distribution dite hétérogène permet de répartir la capacité sur toute la couverture. Une flexibilité en capacité est donc obtenue grâce à la charge utile selon l'invention.

La figure 13 illustre un autre exemple de multiplexage temporel. Comme dans les exemples précédents, il convient de faire en sorte que, sur chaque période, la somme des intervalles de temps reçus simultanément au niveau de chacun des Ne ports d'entrée E de chaque dispositif de routage en anneau DRA soit égale à la somme des intervalles de temps associés aux ports de sortie S alimentés d'un même dispositif de routage en anneau DRA. La figure 13 illustre une utilisation mixte en couverture (certaines zones couvertes, d'autres non) et en distribution (certaines zones reçoivent plus de capacité que d'autres) de la charge utile selon l'invention : les spots ayant 0 intervalles de temps sont considérés comme hors couverture. Le schéma de la figure 13 peut correspondre à un schéma de demande d'un opérateur : beaucoup de clients se trouvent dans les zones grisées, moins dans les zones blanches, et pas du tout dans les zones hachurées. Ce schéma est bien adaptatif, dans la mesure où, en fonction de l'heure de la journée, les dispositifs de routage en anneau peuvent être reconfigurés en fonction de la demande, par exemple en modifiant les positions des commutateurs à ferrite de type R. De même, il est possible d'allouer une certaine capacité non nulle à une zone où il y a de la demande, et, dès que cette zone est desservie par des réseaux filaires haut débit du type fibre optique ou câble, de réduire la capacité allouée à la zone, voire de ne plus la couvrir du tout.

Il est à noter que la charge utile selon l'invention est compatible avec un déploiement progressif des passerelles satellite (ou stations d'ancrage), ce qui peut répondre à un souhait des opérateurs. En effet, en début de mission, il est fréquent que l'opérateur ne dispose pas de toutes les passerelles satellite. Dans ce cas, tous les amplificateurs haute puissance à bord du satellite ne sont pas utilisés. Il est ainsi possible de fonctionner avec un seul port d'entrée en début de mission dans chaque dispositif de routage, puis d'activer les autres ports d'entrée au fur et à mesure.

## Revendications

1. Charge utile de télécommunications pour couverture satellite multi-faisceau, comportant au moins une antenne et une pluralité de sources (SRC) reliées à l'antenne pour délivrer un faisceau correspondant à un spot sur la surface de la Terre, la charge utile comprenant une pluralité d'amplificateurs haute puissance (HPA) configurés pour alimenter les sources (SRC), **caractérisé en ce que** la charge utile comprend également une pluralité de dispositifs de routage en anneau (DRA), chaque dispositif de routage en anneau (DRA) comprenant Ne ports d'entrée (E), où Ne ≥ 2, chaque port d'entrée (E) étant relié à un des amplificateurs haute puissance (HPA), et comprenant également Ns ports de sortie (S), chaque port de sortie (S) étant connecté d'une part à une source (SRC), et pouvant être connecté d'autre part à au plus un port d'entrée (E), et passer alternativement d'un état de connexion à un état de déconnexion, chaque dispositif de routage en anneau (DRA) étant configuré pour que, à un instant t, Ne ports de sortie (S) parmi les Ns ports de sortie (S) puissent être alimentés en fonction de la couverture souhaitée.

2. Charge utile selon la revendication 1, comprenant un dispositif de commande (DCO) configuré pour commander, dans chaque dispositif de routage en anneau (DRA), la connexion ou la déconnexion de chaque port de sortie (S) vis-à-vis de chacun des ports d'entrée (E), le dispositif de commande (DCO) appliquant une commande telle que pour chaque signal de données reçu par la charge utile et entrant au niveau d'un port d'entrée (E), il n'y ait qu'un seul trajet possible entre le port d'entrée (E) et le port de sortie (S) souhaité, et qu'il n'y ait pas d'interférences entre différents trajets dans le dispositif de routage en anneau (DRA).

3. Charge utile selon la revendication 2, dans laquelle le dispositif de commande (DCO) est configuré pour mettre en œuvre un multiplexage temporel tel que, sur une période donnée, pour chaque ensemble de Ne trames composée chacune d'un nombre d'intervalles de temps identiques, la somme des intervalles de temps reçus simultanément au niveau de chacun des Ne ports d'entrée (E) du dispositif de routage en anneau (DRA) soit égale à la somme des intervalles de temps associés aux ports de sortie (S) connectés d'un même dispositif de routage en anneau (DRA) le nombre de ports de sortie (S) connectés sur ladite période étant compris entre Ne et Ns.

4. Charge utile selon l'une des revendications précédentes, dans laquelle, la surface couverte par le satellite de télécommunications pouvant être segmentée en Ns mailles élémentaires (ME), chaque maille élémentaire (ME) comportant autant de spots que la charge utile comprend de dispositifs de routage en anneau (DRA).

5. Charge utile selon l'une des revendications précédentes, dans laquelle les ports d'entrée (E) et de sortie (S) sont reliés entre eux, dans le dispositif de routage en anneau (DRA), par au moins un commutateur à ferrite de type R (SWR) ou par au moins un commutateur ferrite SP2T.

6. Charge utile selon la revendication 5, dans laquelle le dispositif de routage en anneau (DRA) comprend un premier (E1), un deuxième (E2) et un troisième (E3) ports d'entrée, et un premier (S1), un deuxième (S2), un troisième (S3), un quatrième (S4), un cinquième (S5), un sixième (S6), un septième (S7), un huitième (S8) et un neuvième (S9) ports de sortie, et comprenant par ailleurs un premier commutateur à ferrite de type R (SWR1) couplé au premier port d'entrée (E1) et au premier port de sortie (S1), un deuxième commutateur à ferrite de type R (SWR2) couplé au premier commutateur à ferrite (R1), au deuxième port de sortie (S2) et au troisième port de sortie (S3), un troisième commutateur à ferrite de type R (SWR3) couplé au deuxième commutateur à ferrite de type R (SWR2), au deuxième port d'entrée (E2) et au quatrième port de sortie (S4), un quatrième commutateur à ferrite (SWR4) couplé au troisième commutateur à ferrite de type R (SWR3), au cinquième port de sortie (S5) et au sixième port de sortie (S6), un cinquième commutateur à ferrite de type R (SWR5) couplé au quatrième commutateur à ferrite de type R (SWR4), au troisième port d'entrée (E3) et au septième port de sortie (S7), un sixième commutateur à ferrite de type R (SWR6) couplé au cinquième commutateur à ferrite de type R (SWR5), au premier commutateur à ferrite de type R (SWR1), au huitième port de sortie (S8) et au neuvième port de sortie (S9).

7. Charge utile selon la revendications 5, dans laquelle le dispositif de routage en anneau comprend un premier (E1') et un deuxième (E2') ports d'entrée, et un premier (S1'), un deuxième (S2'), un troisième (S3') et un quatrième (S4') ports de sortie, et comprenant par ailleurs un premier commutateur à ferrite de type R (SWR1') couplé au premier port d'entrée (E1'), au premier port de sortie (S1') et au troisième port de sortie (S3'), et un deuxième commutateur à ferrite de type R (SWR2') couplé au deuxième port d'entrée (E2'), au deuxième port de sortie (S2') et au quatrième port de sortie (S4').

8. Charge utile selon l'une des revendications précédentes, comprenant une pluralité de dispositifs de filtrage (FIL), chaque dispositif de filtrage (FIL) étant couplé à un des amplificateurs haute puissance (HPA), chaque dispositif de filtrage (FIL) comprenant un filtre passe-haut et un filtre passe-bas, les ports d'entrée (E) d'un dispositif de routage en anneau (DRA) étant couplés exclusivement à des filtres passe-haut, ou exclusivement à des filtres passe-bas.

9. Charge utile selon l'une des revendications précédentes, comprenant seize dispositif de routage en anneau (DRA), et dans lequel Ne=3, Ns=9.

10. Satellite comprenant une charge utile selon l'une des revendications précédentes.
